# EUROPEAN PATENT APPLICATION

(11) **EP 2 009 412 A1**
(43) Date of publication of application: **31.12.2008**
(21) Application number: 07111043.1
(22) Date of filing: 26.06.2007
(51) Int. Cl.: G01J 3/28, G01J 3/02

(54) **Device for determination of values of interest in a composite specimen**

(71) Applicant: FOSS Analytical A/S, 3400 Hilleroed (DK)
(72) Inventor: Pedersen, Dorthe Kjær FOSS Analytical A/S, 2720, Vanløse (DK); Fabricius, Finn, 3460, Birkerød (DK)
(74) Representative: Hilton, Charles Paul

(57) **Abstract**

A device for analysis of a composite specimen (**1**) by a spectroscopic image (**22**) characterised in that a topographic profile (**16**) is recorded and characterised further in that an integration of the topographic profile (**16**) and the spectroscopic image (**22**) is carried out into one or more aggregated or segregated values of interest for the composite specimen (**32**).

## Description

### Technical Field

The present invention relates to a device for determining a concentration or another value of interest in a composite specimen by means of combined 3 dimensional scanning and image spectroscopy. As used herein the term spectroscopy shall be taken to mean any technique utilising absorption, reflection, scatter, and/or flourescence in any or all of that portion of the electromagnetic spectrum that extends from x-ray to mid-infrared (wavelengths 1 pm - 3 mm).

### Background Art

A known methodology for analysis of a wide variety of materials, including food, soil, minerals, building materials, and pharmaceuticals is absorption spectroscopy, where electromagnetic radiation is transmitted through a specimen. A portion of the radiation is absorbed by the specimen, and for each frequency the extent of absorption depends on the constituents and their concentration in the specimen. If absorption at a multitude of wavelengths is registered, this is called an absorption spectrum. Similarly the spectroscopic technique flourescence utilises the ability of certain compounds which after absorbing electromagnetic radiation are able to emit light with specific wavelengths; i.e. a flourescence spectrum.

From a database of observed spectra (such as absorption or flourescence spectra), a multivariate statistical model of correlations between concentrations or other values of interest and the spectra can be calculated, and this calibration model may then be applied to future spectra to calculate the corresponding value of interest.

For a specimen which can be prepared with a well defined physical structure such as a loaf of bread, or a slice of meat, spectroscopic analysis of images is known. By a suitable optical configuration, such as utilising a multitude of detectors, or controlled movement of mirrors and a single detector the spectrum in different positions may be registered, forming a spectroscopic image. In US 20050266147 A (GANG YAO; KESHUN LIU; FU-HUNG HSIEH) 01.03.1906 it is disclosed that with sample preparation and image enhancement the amount of fibre in artificial meat may be calculated from the characteristics of a flourescence image, but a requirement of this is that the specimen has a uniform height.

Similarly other spectroscopic methods known to the person skilled in the art, such as reflection spectroscopy, absorption spectroscopy and Raman scatter spectroscopy may be configured to record a spectroscopic image of the specimen, which by the use of a suitable calibration model may generate an image corresponding to a value of interest, such as the concentration of a species.

Accordingly in the analysis of an inhomogeneous or composite specimen a common challenge is the lack of homogeneity of the specimen. The challenge is overcome by various means, a typical way is the homogenisation of a specimen, by mechanical destruction, such as milling, grinding or mincing. This has however, the effect that the specimen cannot be used after analysis, and accordingly such methods are called destructive analysis.

It is however, often desired that a specimen may be used after analysis; e.g. because the specimen has a significant value or in a production process or because it is desired to analyse everything produced in the process.

Another characteristic in the analysis of non-homogeneous specimens is the fact that the variation within a specimen is the value of interest for a sample, if e.g. the extent of mixing between various raw materials is important.

### Disclosure of Invention

It is an objective of the present invention to alleviate the problems of determining the contribution of the individual parts of a specimen to one or more figures of interest representing the volume distribution of the values of interest of said specimen.

According to the present invention there is provided a device for determining a concentration of a constituent or another value of interest in a non-homogeneous specimen, by combination of a topographic representation of the specimen and a spectropscopic analysis of the specimen.

The topographic representation of the specimen may be obtained by means of an optical method utilising a series of images recorded at varying relative positions of an optical imaging device and the specimen of interest or by means of a single image utilising structured light. The images are, after recording, treated appropriately to create a topographic representation of the specimen, such as a voxel (volume picture element) representation.

From a spectral image viewing position a 2 dimensional spectroscopic image of the specimen is also recorded, by use of an appropriate spectroscopic method, including reflectance, absorption, fluoresence, Raman scatter, all known to the person skilled in the art. The wavelengths recorded can accordingly be any in a wide range from x-ray to infrared (corresponding to wavelengths between 1 pm and 3 mm). This spectroscopic representation of the specimen can then be used to obtain a range of values of interest at specific surface positions of the specimen, including but not only chemical composition, by traditional image analysis and/or multivariate statistical methods.

The topographic representation of the specimen is then transformed into a 2 dimensional viewing surface, corresponding to the view from the spectral image viewing position, creating a mapping between the 2 dimensional characterisation of chemical composition or other values of interest, and the 3 dimensional topographic structure.

The mapping between 2 and 3 dimensions is used to calculate the volumes corresponding to the values of interest at the surface, and accordingly the values of interest may be summarised corresponding to the true volumetric distribution in the non-homogeneous sample, and thus either obtain a more accurate figure for the value of interest or a more detailed representation of the distribution of the value of interest.

The composite specimen analysed may be of many types, including the following non-exhaustive list; a prepared or unprepared meal, one or several plants or sections of plants such as fruit, root, leaves, seeds, stems and trunks of the same or different nature, one or several cuts or trimmings of meat, bone, and other materials of originating from animals, one or several of plants, water and soil, concrete enforced with stone and steel, mixtures of geological origin such as earth, stones and minerals including precious stones or coals of various types, and including mixtures of the above materials.

The value of interest may be one or several of many properties, including the following non-exhaustive list; concentrations of chemical constituents, including total and/or specific fats, proteins, and carbohydrates, nutritional or combustion calorific content, structural composition, density, physical strength, and elementary composition.

### Brief Description of Figures in the Drawings

The advantages of the present invention will be further clarified from a reading of the following description of exemplary embodiments of the present invention, made with reference to the drawings of the accompanying figures.

Fig. 1 is a schematic diagram of an embodiment of the present invention for obtaining a 3 dimensional profile of a value of interest in a composite specimen.

Fig. 2 is a schematic diagram corresponding to several alternative embodiments of the present invention, in which the numbering scheme from Fig. 1 is followed for similar items.

Fig. 3 is a schematic diagram corresponding to further possible embodiment of the invention described, in the form of a specific device for the analysis in connection with preparation of foods. The numbering scheme from Fig. 1 is again followed for similar items.

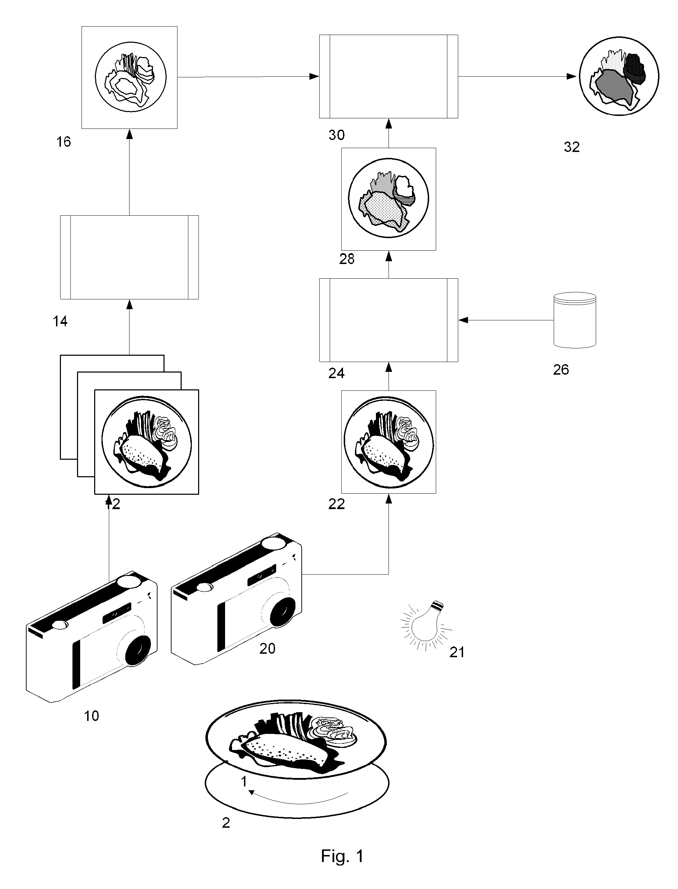

Referring to Fig.1, a device for obtaining a 3 dimensional profile of a value of interest in a composite specimen **1**, comprises an optical device **10**, such as a camera, recording a set of images **12** of the composite specimen **1**, recorded at different relative positions of the camera **10** and the composite specimen **1**. A relative movement of the specimen **1** and the imaging device **10**, may be obtained by a method such as, but not necessarily, rotation of the specimen **1** on a rotating plate **2**. By means of a suitably configured image analysis data processor **14**, the set of images 12, are converted to a topographic representation **16** of the composite specimen, employing various methods for image analysis known to the person skilled in the art.

An imaging spectroscopic device **20,** together with an electromagnetic radiation source **21**, appropriately positioned depending on the spectroscopic method of interest, is used to obtain a spectroscopic image **22** of the composite specimen **1**. The spectroscopic image **22** is converted to an image **28** representing the value of interest in specific regions of the composite specimen **1** by means of a suitably configured calibration data processor **24** utilizing a calibration model or database **26.**

The topographic representation **16** and the image corresponding to the value of interest **28** are combined by means of an integration data processor **30** to calculate the value of interest as distributed across the specimen **32**, either as total values, average values or e.g. statistical parameters indicating the distribution of values, and in this way calculate an estimate of the 3-dimensional distribution of values of interest.

Said image analysis data processor **14** calibration analysis data processor **24** calibration model or database **26** and integration data processor **30** may reside on the same or on multiple physical data processing units.

A number of alternative embodiments of the invention exist. In the following, these mainly differ in the acquirement of the series of optical images **12** and/or the spectroscopic image **22** while the process steps following this are similar to the process described in the preferred embodiment.

In a second, alternative, embodiment, referring to Fig. 2, the series of optical images **12** is obtained by a camera **10** recording images of one or more wavelengths of the specimen.

The spectroscopic image **22** may in this embodiment be an absorption image which may be recorded from electromagnetic energy being absorbed by the specimen **1**. The absorption detection system image may in this case be one or several radiation sources **21** and a corresponding spectroscopic imaging device **20** positioned on separate sides of the specimen **1.** The spectroscopic imaging device **20** may in this embodiment be a line camera registering multiple individual strip-sections of the spectroscopic image **22** by relative movement of the spectroscopic imaging device **20** and the specimen **1**, by means of a device such as a conveyor belt **3**. Alternatively the spectroscopic imaging device may be a camera **20** sensitive to the relevant wavelength of radiation of the electromagnetic radiation source **21** registering a 2-dimensional image in one process step. The range of radiation wavelength of the electromagnetic radiation source **21** chosen for the absorption spectroscopy may be of many types, including X-rays, Near Infrared (NIR) and other, dependent on the characteristics of the specimen analysed, as will be known by the person skilled in the art.

A third embodiment of the invention described is a configuration where the series of optical images **22** for establishing a topographic representation **24** is obtained by a camera **20** as described above, and the spectroscopic image **12** is obtained by an imaging spectroscopic device **22**, based on sequential recording of spectroscopic characteristics at varying regions of the specimen **1**, by registration of a reduced number of spectroscopic characteristics in sequence after each other. Said imaging spectrometer **20** could be of the Raman type, such as described in US 5528368 B (EDGAR N. LEWIS ET AL) 23.12.1994 , in which an opto-mechanical setup involving movable mirrors enables selective illumination and recording of Raman shift spectra from individual physical positions of the specimen **1**, which are subsequently combined to form an image **22**.

A fourth embodiment of the invention described is the recording of a series of multiple images **12** recorded from the air at an altitude by a camera **10** with an angle of photography enabling sufficient extent of partial side views of the objects photographed to provide the calculation of a topographic representation **16**, in combination with a 2 dimensional image **22** from above with spectroscopic information in a relevant spectroscopic range. In this embodiment the invention may be used for surveying geological characteristics or biomass with increased accuracy, by including the information on volume, instead of just surface areas.

A fifth embodiment of the invention described is the recording of a series multiple microscopic images **12**, which may be obtained by a method involving several cameras **10** such as stereoscopic microscopy recording a series of two images **12** or alternative techniques recording two more images of the specimen from different positions, in combination with a relevant spectroscopic imaging technique, which will enable calculation of a topographic representation 16 from the multiple images which then may be combined with the data from the microscopic spectroscopic imaging technique to provide values obtained from spectroscopic data which is more representative of the volumes in the specimen.

A sixth embodiment of the invention described is the recording of specimen topographic representation **16** by illumination by structured light, such as a laser grid. Illuminating the specimen with e.g. a regular light grid will be observed as a deformed grid in accordance with the specimen topography, and the grid deformation may subsequently be used to calculate a topographic representation **16** of the specimen, by a suitably configured image analysis data processor **14** employing suitable mathematical algorithms known to the person skilled in the art. A spectroscopic image **22** is obtained by any of the spectroscopic techniques listed in the embodiments above, and subsequently be combined with the topographic representation **16** to generate a topographic representation **32** of the values of interest.

Referring to Fig. 3, a seventh embodiment of the invention described, is a specific device for the preparation of foods. An optical imaging device **10** such as a CCD camera is positioned in a kitchen appliance **40** such as a microwave oven. Said kitchen appliance **40** may be equipped with a rotating plate **2** for ensuring uniformity of heating of a meal. The rotation may also be used to establish recording of a series of optical images **12** at varying relative positions of the specimen **1** and the camera **10**. In addition the meal **1** may be illuminated with a broad spectrum of near infra red radiation by an electromagnetic radiation source **21**, and the same camera **10** may be configured to collect one or more near-infrared reflection images at specific wavelenghts, which may analysed by a suitably configured data processor **24** in a manner similar to the embodiments above, and be used to calculate the values of interest in the meal prior to serving. These values may then be recorded, and for the purpose of calculating the actual intake of the person eating the meal, the values of interest may in the same way be calculated for the remains of the meal, and subtracted from the values of the meal as served.

## Claims

1. A device for analysis of a composite specimen (**1**) by a spectroscopic image ( **22**) **characterised in that** a topographic profile (**16**) is recorded and **characterised** further **in that** an integration of the topographic profile (**16**) and the spectroscopic image (**22**) is carried out into one or more aggregated or segregated values of interest for the composite specimen (**32**).

2. The device claimed in Claim 1, in which the topographic profile (**16**) is obtained by use of an imaging device (**10**) registering a series of multiple images (**12**) and an image analysis data processor (**14**) suitably configured for obtaining the topographic profile (**16**) of the specimen (**1**) and the spectroscopic image is registering by use of a spectrometer (**20**) registering spectral information for a multitude of limited sections of the sample (**22**) and this spectral information is subjected to a calibration data processor (**24**) having access to calibration information (26) linking the spectral information (**20**) to the property of interest and being configured to receive the recorded spectral information (**22**) and to process the same using the calibration information (**26**) to calculate a value of the property of interest (**28**).

3. The device as claimed in any one of the claims above, in which the optical spectrometer (**20**) is a device configured to collect spectral reflection information (**22**) from a multitude of individual sections of the sample in one step.

4. The device as claimed in any one of the claims above, in which the optical spectrometer (**20**) is configured to collect spectral information corresponding to a multitude of limited sections of the specimen (**1**) by relative movement of the optical system of the spectroscopic imaging device (**20**), and the specimen (**1**).

5. The device as claimed in any one of the claims above, in which the topographic profile (**16**) of the composite specimen (**1**) is obtained by a relative movement of the specimen, one or several electromagnetic radiation sources (**2**), and an optical imaging device (**10**) adapted to record multiple images during relative movement.

6. The device as claimed in any one of the Claims above, in which the spectroscopic imaging device (**20**) and optical imaging device (**10**) is the same.

7. The device as claimed any in one of the Claims 1 to 5, in which the spectroscopic imaging device (**20**) and optical imaging device (**10**) are not the same.

8. The device as claimed any in one of the Claims above, **characterised in that** the device is integrated into a regular kitchen appliance (**40**), such as a balance, oven, microwave oven.
